# EUROPEAN PATENT APPLICATION

(11) **EP 2 815 890 A1**
(43) Date of publication of application: **24.12.2014**
(21) Application number: 12868584.9
(22) Date of filing: 24.02.2012
(51) Int. Cl.: B60B 1/04, B62K 19/02

(54) **FOLDABLE BICYCLE WHEEL**

(30) Priority: 16.02.2012 KR 20120015761
(71) Applicant: Lee, Dong-Yeoub, Eunpyeong-gu, Seoul 122-100 (KR)
(72) Inventor: Lee, Dong-Yeoub, Eunpyeong-gu, Seoul 122-100 (KR)
(74) Representative: Von Kreisler Selting Werner - Partnerschaft von Patentanwälten und Rechtsanwälten mbB
(86) International application number: PCT/KR2012/001407
(87) International publication number: WO 2013/122279

(57) **Abstract**

The present invention relates to a foldable bicycle wheel. The present invention allows a bicycle wheel to be folded into a small volume and allows a tire, including the rim, to be folded into two sizes, large and small, in a dislocated manner so as to be folded into a minimum volume, thereby improving the convenience of storage and transportation.

## Description

### TECHNICAL FIELD

The present invention relates to a foldable bicycle wheel, and more particularly, to a foldable bicycle wheel which is developed to reduce a volume of a bicycle by folding a bicycle wheel that is the largest in volume, even through a simple operation, when the bicycle is not used but is safely kept

### BACKGROUND ART

As known in the art, a bicycle is a means of personal transportation using a human power and enables a user to obtain an excellent exercise effect. Such an exercise effect is substantially the same as that in a full-body aerobic exercise that does not impose an excessive load to the knee joints unlike jogging, marathon or the like. In particular, it is considered that the full-body aerobic exercise using the bicycle is advantageous to patients who have an abnormality in joints of their lower bodies, osteoporotic patients, women, and the old and the weak.

In addition, the bicycle is an environmentally friendly means for transportation, which does not discharge pollutants to the environment. Nowadays, the number of office workers who use a commuter bicycle in the city is increasing due to serious traffic congestion, and thus the bicycle-only road infrastructure is being expanded.

However, the bicycle entails a shortcoming in that it is not easy to be safely kept. Thus, bicycles designed to be folded or collapsed in various manners have attracted popularity. Meanwhile, in an attempt to solve a problem associated with a bicycle wheel that is the largest in volume, the bicycle wheel is made small. Nevertheless, such a bicycle is disadvantageous in that the distance and speed in which the bicycle can travel at the same rotation is remarkably decreased.

### DISCLOSURE OF INVENTION

### TECHNICAL PROBLEM

Accordingly, the present invention has been made in order to solve the above-mentioned problems occurring in the prior art, and it is an object of the present invention is to provide a foldable bicycle wheel that can be easily folded into a small volume.

Another object of the present invention is to provide a foldable bicycle wheel that is configured to be folded and unfolded through a simple operation.

### TECHNICAL SOLUTION

To achieve the above object, the present invention provides a bicycle wheel configured to be folded to reduce its volume, including: a first hub formed in a disc shape having a flat surface at the left and right sides thereof, the first hub including a first shaft hole formed at the center thereof and a first hinge bracket formed in plural numbers radially from the center thereof in such a manner as to be cut out in one direction, each first hinge bracket having a first hinge hole formed in proximity to a distal end thereof; a first spoke having a first hinge formed at one end thereof so as to coupled to the first hinge hole of the first hub, the first spoke being configured such that it is expanded radially and then is folded in a direction in which the first hinge bracket is cut out in a state in which the first hinge is coupled to the first hinge hole; a second spoke mounted at the other end of the first spoke so as to be opposed to the first hinge of the first spoke and having a first hinge coupling unit formed protrudingly in the direction in which the first hinge bracket is cut out, the second spoke including a first rim extending radially outwardly therefrom and extending circumferentially in a clockwise or counterclockwise direction and a first tire piece mounted on the first rim; a second hub including a second shaft hole formed at the center thereof so as to be symmetrical with the first hub and a second hinge bracket having a second hinge hole; a third spoke including a second hinge formed at one end thereof so as to be symmetrical with the first spoke; and a fourth spoke mounted at the other end of the third spoke so as to be opposed to the second hinge of the third spoke and having a second hinge coupling unit formed protrudingly in a direction in which the second hinge bracket is cut out so as to be rotated with the first hinge coupling unit, the fourth spoke including a second rim and a second tire piece extending radially outwardly therefrom so as to be opposed to the first rim and the first tire piece, whereby the first and second spokes and the third and fourth spokes are folded crossing each other by the first and second hinge coupling units, and when the first and second rims and the first and second tire pieces are unfolded, they are brought into close contact with each other to form a ring shape.

Further, the bicycle wheel may further include: a first shaft 7 disposed between the first and second hubs 1 and 4 and having a disc shape, the first shaft 7 including a first bush 71 and configured to penetrate through the first shaft hole 11 of the first hub 1 while abutting against the inner circumferential surface of the first shaft hole 11; and a second shaft 8 disposed between the first and second hubs 1 and 4 and having a disc shape, the second shaft 8 including a second bush 81 and configured to penetrate through the second shaft hole 41 of the second hub 4 while abutting against the inner circumferential surface of the second shaft hole 41, wherein the first and second shafts 7 and 8 have a plurality of fixing lugs 73 and a plurality of corresponding fixing recesses 83 respectively formed on the contacting surfaces thereof.

In addition, the first hinge bracket 13 and the second hinge bracket 43 may be configured such that long first hinge bracket and second hinge bracket 13a and 43a and short first hinge bracket 13b and second hinge bracket 43b are formed radially in such a manner as to be alternately arranged each other, and the second hinge bracket 43 and the first hinge bracket 13 that are adjacent to each other have the same length as each other; and the first and second rim 32b and 62b and the first and second tire pieces 33b and 63b formed on the second and fourth spokes 3 and 6 connected to the short hinge brackets 13b and 43b may have an arc length shorter than that of the first and second rims 32a and 62a and the first and second tire pieces 33a and 63a formed on the first and third spokes 2 and 5 connected to the long hinge brackets 13a and 43a.

### ADVANTAGEOUS EFFECTS

The foldable bicycle wheel of the present invention has an advantageous effect in that

The present invention as described above has an advantage in that a bicycle wheel can be folded into a small volume and a tire including a rim can be folded into two sizes, large and small, in a dislocated manner so as to have a minimum volume after being folded, thereby facilitating storage and transportation.

In addition, the bicycle wheel is folded by pulling first and second hubs in the opposite directions to each other, thereby greatly facilitating the folding process of the bicycle wheel.

Features and advantages of the present invention will be more apparent from the following detailed description. Prior to the following detailed description, the terms or words used in the specification and the claims of the present invention should not be construed as being typical or dictionary meanings, but should be construed as meanings and concepts conforming to the technical spirit of the present invention on the basis of the principle that an inventor can properly define the concepts of the terms in order to describe his or her invention in the best way.

### BRIEF DESCRIPTION OF THE DRAWINGS

The above as well as the other objects, features and advantages of the present invention will be more apparent from the following detailed description taken in conjunction with the accompanying drawings, in which:
FIG. 1 is a perspective view showing a bicycle wheel according to an embodiment of the present invention;
FIG. 2 is a perspective show showing a state in which a bicycle wheel according to an embodiment of the present invention has been folded;
FIG. 3 is a side view showing a bicycle wheel according to an embodiment of the present invention;
FIG.4 is a side show showing a state in which a bicycle wheel according to an embodiment of the present invention has been folded;
FIG. 5 is an exploded perspective view showing a bicycle wheel according to an embodiment of the present invention;
FIG. 6 is a front cross-sectional view showing a state in which a bicycle wheel according to an embodiment of the present invention has been unfolded;
FIG. 7 is a front cross-sectional view showing a state in which a bicycle wheel according to an embodiment of the present invention is being folded; and
FIG. 8 is a front cross-sectional view showing a state in which a bicycle wheel according to an embodiment of the present invention has been folded.

***Explanation on reference numerals of main elements in the drawings***

| | | | |
|---|---|---|---|
| 1: | first hub | 11: | first shaft hole |
| 12: | first hinge hole | 13, 13a, 13b: | first hinge bracket |
| 2: | first spoke | 21: | first hinge |
| 3: | second spoke | 31: | first hinge coupling unit |
| 32, 32a, 32b: | first rim | 33, 33a, 33b: | first tire piece |
| 4: | second hub | 41: | second shaft hole |
| 42: | second hinge hole | 43, 43a, 43b: | second hinge bracket |
| 5: | third spoke | 51: | second hinge |
| 6: | fourth spoke | 61: | second hinge coupling unit |
| 62, | 62a, 62b: second rim | 63, 63a, 63b: | second tire piece |
| 7: | first shaft | 71: | first bush |
| 72: | first shaft rod | 73: | fixing lugs |
| 8: | second shaft | 81: | second bush |
| 82: | second shaft rod | 83: | fixing recesses |

### BEST MODE FOR CARRYING OUT THE INVENTION

Now, preferred embodiments of the present invention will be described hereinafter in detail with reference to the accompanying drawings. It should be noted that the same elements in the drawings are denoted by the same reference numerals although shown in different figures. In the following description, the detailed description on known related function and constructions will be omitted to avoid unnecessarily obscuring the subject matter of the present invention.

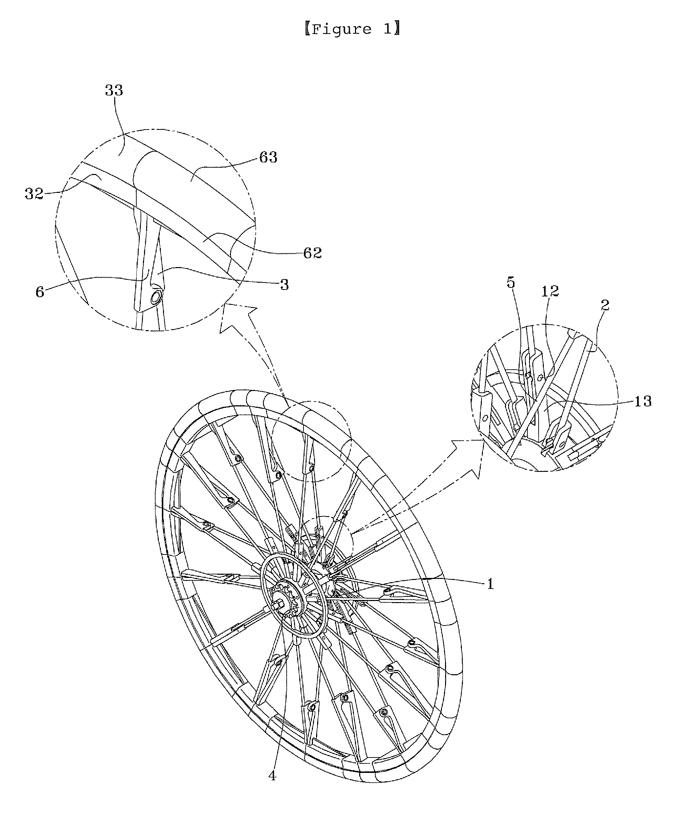

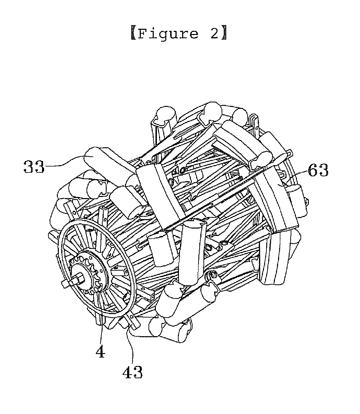

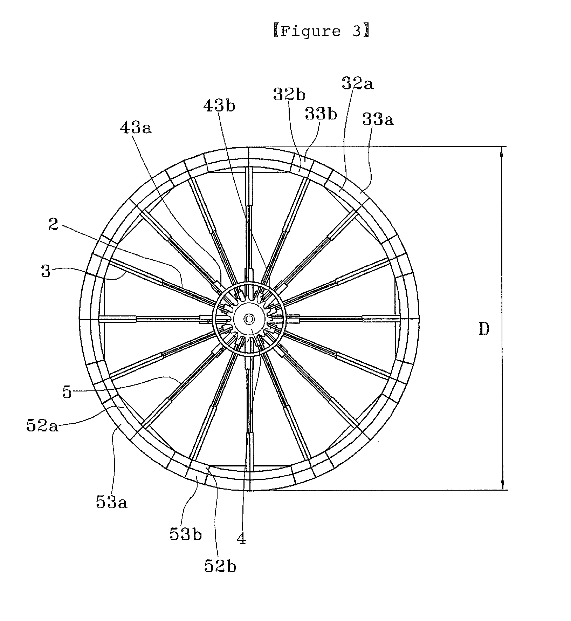

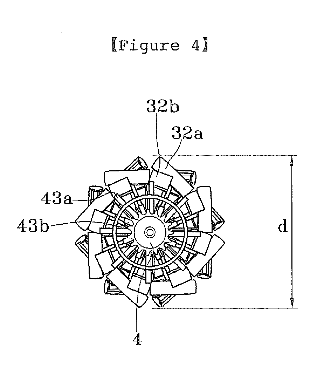

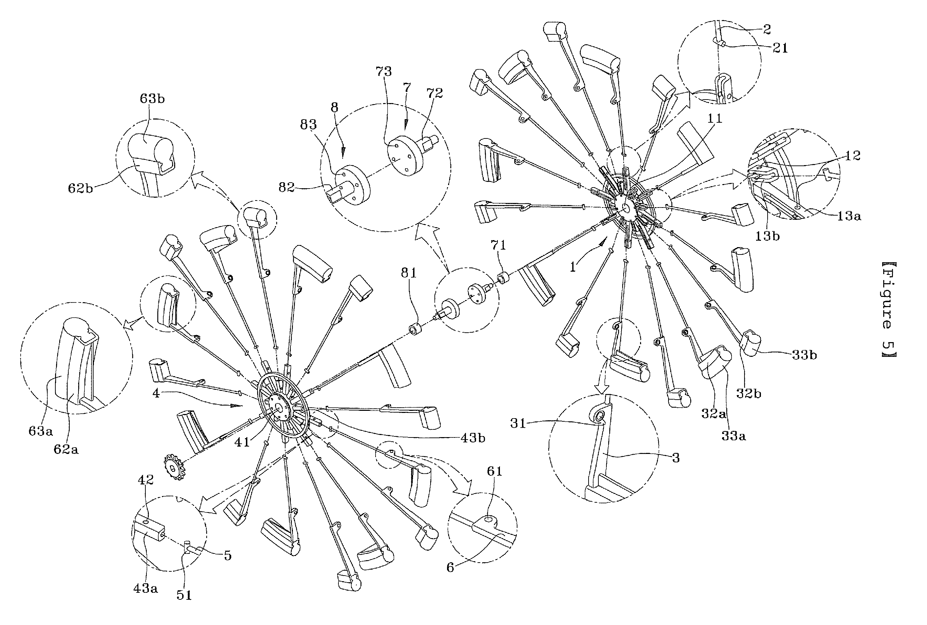

FIG. 1 is a perspective view showing a bicycle wheel according to an embodiment of the present invention, FIG. 2 is a perspective show showing a state in which a bicycle wheel according to an embodiment of the present invention has been folded, FIG. 3 is a side view showing a bicycle wheel according to an embodiment of the present invention, FIG.4 is a side show showing a state in which a bicycle wheel according to an embodiment of the present invention has been folded, and FIG. 5 is an exploded perspective view showing a bicycle wheel according to an embodiment of the present invention.

A bicycle wheel configured to be folded to reduce its volume, includes:
a first hub 1 formed in a disc shape having a flat surface at the left and right sides thereof, the first hub including a first shaft hole 11 formed at the center thereof and a first hinge bracket 13 formed in plural numbers radially from the center thereof in such a manner as to be cut out in one direction, each first hinge bracket having a first hinge hole 12 formed in proximity to a distal end thereof;
a first spoke 2 having a first hinge 21 formed at one end thereof so as to coupled to the first hinge hole 12 of the first hub 1, the first spoke 2 being configured such that it is expanded radially and then is folded in a direction in which the first hinge bracket 13 is cut out in a state in which the first hinge 21 is coupled to the first hinge hole 12
a second spoke 3 mounted at the other end of the first spoke 2 so as to be opposed to the first hinge 21 of the first spoke 2 and having a first hinge coupling unit 31 formed protrudingly in the direction in which the first hinge bracket 13 is cut out, the second spoke 3 including a first rim 32 extending radially outwardly therefrom and extending circumferentially in a clockwise or counterclockwise direction and a first tire piece 33 mounted on the first rim 32;
a second hub 4 including a second shaft hole 41 formed at the center thereof so as to be symmetrical with the first hub 1 and a second hinge bracket 43 having a second hinge hole 42;
a third spoke 5 including a second hinge 51 formed at one end thereof so as to be symmetrical with the first spoke 3; and
a fourth spoke 6 mounted at the other end of the third spoke 5 so as to be opposed to the second hinge 51 of the third spoke 5 and having a second hinge coupling unit 61 formed protrudingly in a direction in which the second hinge bracket 43 is cut out so as to be rotated with the first hinge coupling unit 31, the fourth spoke 6 including a second rim 62 and a second tire piece 63 extending radially outwardly therefrom so as to be opposed to the first rim 32 and the first tire piece 33,
whereby the first and second spokes 2 and 3 and the third and fourth spokes 5 and 6 are folded crossing each other by the first and second hinge coupling units 31 and 61, and when the first and second rims 32 and 62 and the first and second tire pieces 33 and 63 are unfolded, they are brought into close contact with each other to form a ring shape.

Conventionally, there are several methods in which a bicycle wheel is folded to reduce its volume. But these methods take a configuration in which a common folding operation is performed through lots of steps, and a considerable time is consumed, thus causing an inconvenience to a user. On the other hand, the present invention takes a structure in which when the first and second hubs 1 and 4 constituting the bicycle wheel are pulled to both sides in a state of being gripped by the user's hand as shown in FIGs. 1 to 4, the bicycle wheel is folded.

In addition, even in the case where the folded bicycle wheel is unfolded, when the first and second hubs 1 and 4 that are separated from each other approach each other to be brought into close contact with each other, the bicycle returns to its original state. As such, the bicycle can be folded through a single operation. If the bicycle wheel occupying the largest space during its storage is separated and folded, it can be easily stored even in a small space. Even in the case where the user leaves on a trip, he or she may load the bicycle into a vehicle or carry around it for the purpose of a leisure vacation.

In particular, even though the bicycle wheel of the present invention is a racing bicycle wheel having a relatively large diameter, when it is folded, its length is about a half of its diameter in a horizontal direction and its height is one fourth or one fifth of the height of an unfolded bicycle. Thus, the bicycle wheel of the present invention features that it has a volume suitable for storing and carrying around the bicycle.

In this case, although the basic claims are focused on a principle that the bicycle wheel is folded, in order to allow a separate shaft to perform an idling operation in case of a front wheel, an embodiment is additionally proposed in which the bicycle wheel includes a first shaft 7 disposed between the first and second hubs 1 and 4 and having a disc shape, the first shaft 7 including a first bush 71 and configured to penetrate through the first shaft hole 11 of the first hub 1 while abutting against the inner circumferential surface of the first shaft hole 11; and a second shaft 8 disposed between the first and second hubs 1 and 4 and having a disc shape, the second shaft 8 including a second bush 81 and configured to penetrate through the second shaft hole 41 of the second hub 4 while abutting against the inner circumferential surface of the second shaft hole 41, wherein the first and second shafts 7 and 8 have a plurality of fixing lugs 73 and a plurality of corresponding fixing recesses 83 respectively formed on the contacting surfaces thereof.

This embodiment of the present invention is intended to allow the first and second shafts 7 and 8 to perform the same axial movement by the fixing lugs 73 and the fixing recesses 83 to prevent an idling force from being generated between the first and second shafts 7 and 8 when the inventive bicycle wheel performs a function of a wheel while maintaining a state in which the first and second shaft 7 and 8 are separated from each other

In this case, a person of an ordinary skill in the art can easily carry out a method in which the contacting surfaces of the first shaft 7 and the second shaft 8 have different polarities so as to allow the first shaft 7 and the second shaft 8 to be brought into close contact with each other.

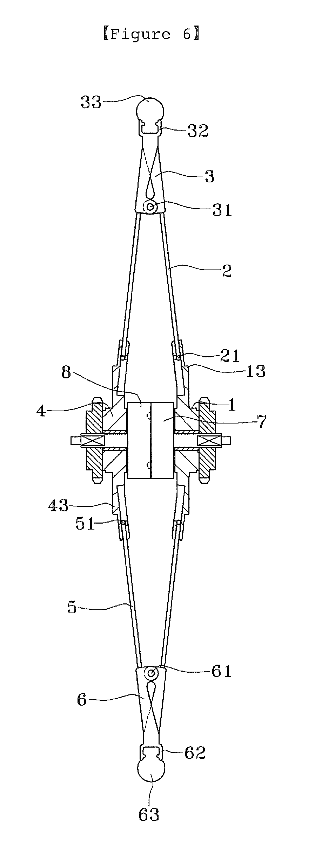

Hereinafter, a process of the bicycle wheel is folded will be described in more detail with reference to FIGs. 6 to 8.

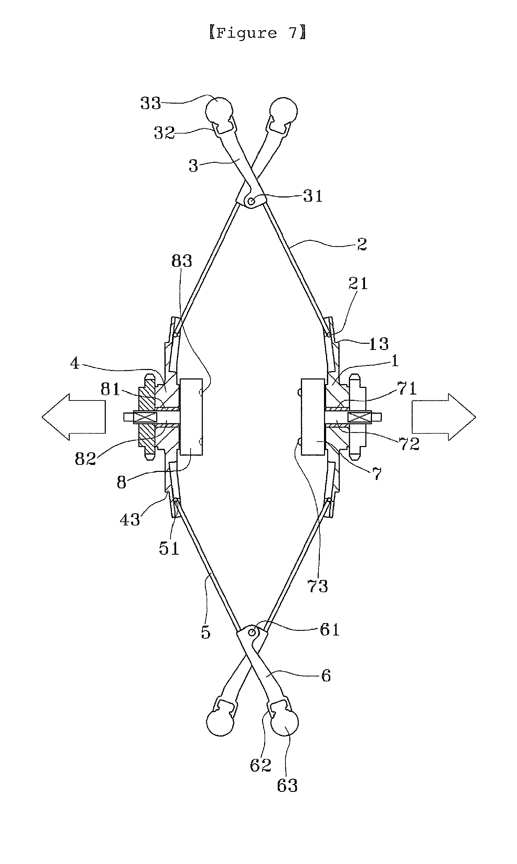

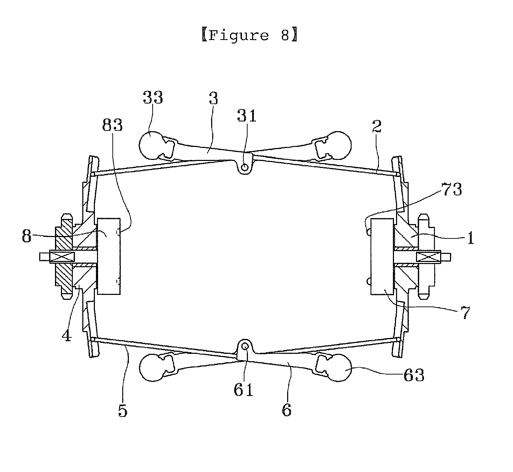

FIG. 6 is a front cross-sectional view showing a state in which a bicycle wheel according to an embodiment of the present invention has been unfolded, FIG. 7 is a front cross-sectional view showing a state in which a bicycle wheel according to an embodiment of the present invention is being folded, and FIG. 8 is a front cross-sectional view showing a state in which a bicycle wheel according to an embodiment of the present invention has been folded.

As shown in FIGs. 6 to 8, at an initial stage, the first and second rims 32 and 62 and the first and second tire pieces 33 and 63 function as a wheel to be driven in a state of abutting against each other at both ends thereof while forming a circular-arc shape, and the bicycle wheel is separated from a bicycle frame so as to be folded. Thereafter, when the first hub 1 an the second hub 4 are pulled in the opposite directions, the bicycle wheel is folded with the first and second spokes crossing each other in an X shape using the first and second hinge coupling units 31 and 61 as rotating shafts. Ultimately, the bicycle wheel is folded until the crossing first and second spokes are not pivotally rotated any longer by the first and second rims 32 and 62 thereof.

In this case, the present invention additionally proposes a method to solve a problem in which when the bicycle wheel is simply folded, the first and second rims 32 and 62 and the first and second tire pieces 33 and 63 cause an interference therebetween in a state of being completely folded, and thus the bicycle wheel is not folded at a folded angle as shown in FIG. 8.

In this method, the first hinge bracket 13 and the second hinge bracket 43 are configured such that long first hinge bracket and second hinge bracket 13a and 43a and short first hinge bracket 13b and second hinge bracket 43b are formed radially in such a manner as to be alternately arranged each other, and the second hinge bracket 43 and the first hinge bracket 13 that are adjacent to each other have the same length as each other; and the first and second rim 32b and 62b and the first and second tire pieces 33b and 63b formed on the second and fourth spokes 3 and 6 connected to the short hinge brackets 13b and 43b have an arc length shorter than that of the first and second rims 32a and 62a and the first and second tire pieces 33a and 63a formed on the first and third spokes 2 and 5 connected to the long hinge brackets 13a and 43a.

In this embodiment of the present invention, if the number of the spokes is small, no problem is caused. On the contrary, if the number of the spokes is large, an interference occurs. Thus, as shown in FIGs. 3 to 5, the second and fourth spokes 3 and 6 folded by the short hinge brackets 13b and 43b are folded on the outer circumferential surface adjacent to the first and second hub 1 and 4, and form the short first and second rims 32b and 62b and the short first and second tire pieces 33b and 63b due to a short circumferential length thereof. In addition, after the second and fourth spokes 3 and 6 connected to the long hinge brackets 13a and 43a are folded, the bicycle wheel has a shape in which the long first and second rims 32a and 62a and the long first and second tire pieces 33a and 63a are connected as if they were folded two-fold on the outer side of the short first and second rims 32b and 62b and the short first and second tire pieces 33b and 63b (see FIGs. 2 and 4).

While the present invention has been described in connection with the exemplary embodiments illustrated in the drawings, they are merely illustrative and the invention is not limited to these embodiments. It will be appreciated by a person having an ordinary skill in the art that various equivalent modifications and variations of the embodiments can be made without departing from the spirit and scope of the present invention. It is obvious that such modifications and variations fall within the spirit and scope of the appended claims.

## Claims

1. A bicycle wheel configured to be folded to reduce its volume, comprising:
a first hub 1 formed in a disc shape having a flat surface at the left and right sides thereof, the first hub including a first shaft hole 11 formed at the center thereof and a first hinge bracket 13 formed in plural numbers radially from the center thereof in such a manner as to be cut out in one direction, each first hinge bracket having a first hinge hole 12 formed in proximity to a distal end thereof;
a first spoke 2 having a first hinge 21 formed at one end thereof so as to coupled to the first hinge hole 12 of the first hub 1, the first spoke 2 being configured such that it is expanded radially and then is folded in a direction in which the first hinge bracket 13 is cut out in a state in which the first hinge 21 is coupled to the first hinge hole 12;
a second spoke 3 mounted at the other end of the first spoke 2 so as to be opposed to the first hinge 21 of the first spoke 2 and having a first hinge coupling unit 31 formed protrudingly in the direction in which the first hinge bracket 13 is cut out, the second spoke 3 including a first rim 32 extending radially outwardly therefrom and extending circumferentially in a clockwise or counterclockwise direction and a first tire piece 33 mounted on the first rim 32;
a second hub 4 including a second shaft hole 41 formed at the center thereof so as to be symmetrical with the first hub 1 and a second hinge bracket 43 having a second hinge hole 42;
a third spoke 5 including a second hinge 51 formed at one end thereof so as to be symmetrical with the first spoke 3; and
a fourth spoke 6 mounted at the other end of the third spoke 5 so as to be opposed to the second hinge 51 of the third spoke 5 and having a second hinge coupling unit 61 formed protrudingly in a direction in which the second hinge bracket 43 is cut out so as to be rotated with the first hinge coupling unit 31, the fourth spoke 6 including a second rim 62 and a second tire piece 63 extending radially outwardly therefrom so as to be opposed to the first rim 32 and the first tire piece 33,
whereby the first and second spokes 2 and 3 and the third and fourth spokes 5 and 6 are folded crossing each other by the first and second hinge coupling units 31 and 61, and when the first and second rims 32 and 62 and the first and second tire pieces 33 and 63 are unfolded, they are brought into close contact with each other to form a ring shape.

2. The bicycle wheel according to claim 1, further comprising: a first shaft 7 disposed between the first and second hubs 1 and 4 and having a disc shape, the first shaft 7 including a first bush 71 and configured to penetrate through the first shaft hole 11 of the first hub 1 while abutting against the inner circumferential surface of the first shaft hole 11; and a second shaft 8 disposed between the first and second hubs 1 and 4 and having a disc shape, the second shaft 8 including a second bush 81 and configured to penetrate through the second shaft hole 41 of the second hub 4 while abutting against the inner circumferential surface of the second shaft hole 41, wherein the first and second shafts 7 and 8 have a plurality of fixing lugs 73 and a plurality of corresponding fixing recesses 83 respectively formed on the contacting surfaces thereof .

3. The bicycle wheel according to claim 1 or 2, wherein the first hinge bracket 13 and the second hinge bracket 43 are configured such that long first hinge bracket and second hinge bracket 13a and 43a and short first hinge bracket 13b and second hinge bracket 43b are formed radially in such a manner as to be alternately arranged each other, and the second hinge bracket 43 and the first hinge bracket 13 that are adjacent to each other have the same length as each other; and the first and second rim 32b and 62b and the first and second tire pieces 33b and 63b formed on the second and fourth spokes 3 and 6 connected to the short hinge brackets 13b and 43b have an arc length shorter than that of the first and second rims 32a and 62a and the first and second tire pieces 33a and 63a formed on the first and third spokes 2 and 5 connected to the long hinge brackets 13a and 43a.
